Europäisches Patentamt

European Patent Office

Office européen des brevets

(19)

(11) Veröffentlichungsnummer: **0 030 531**
**A2**

# (12) EUROPÄISCHE PATENTANMELDUNG

(21) Anmeldenummer: 81100153.6

(22) Anmeldetag: 12.07.79

(51) Int. Cl.³: **B 62 D 25/10**

(30) Priorität: 13.07.78 **DE 7820974 U**
21.11.78 **DE 2850470**

(43) Veröffentlichungstag der Anmeldung: 17.06.81
**Patentblatt 81/24**

(84) Benannte Vertragsstaaten: **FR GB**

(60) Veröffentlichungsnummer der früheren Anmeldung nach Art. 76 EPÜ: **0007104**

(71) Anmelder: **BOSSERT KG, Schützenstrasse 20-24, D-7340 Geislingen (DE)**

(72) Erfinder: **Bossert, Walter, Dipl.-Ing., Franzosenweg 21, D-7340 Weller o.H. (DE)**

(74) Vertreter: **Raible, Hans Dipl.-Ing., Birkenwaldstrasse 213, D-7000 Stuttgart 1 (DE)**

(54) **Klappenvorrichtung für ein Fahrzeug.**

(57) Eine Klappe (65) zur Abdeckung von Fahrzeugöffnungen, z. B. eines Tankverschlusses, ist in einer sehr flachen Mulde an der Außenseite des Fahrzeugs um eine Achse (66) drehbar, so daß man sie öffnen oder schließen kann. Ein Federglied (60) hält sie in ihrer Schließ- oder Offenstellung fest. Die Klappe (65) besteht aus Kunststoff, und damit sie sich nicht durch die Wirkung des Federglieds (60) dort durchwölbt, wo dieses Federglied an ihr angreift, läßt man das Federglied an zwei oder mehr Stellen an der Klappe (65) angreifen, teilt also die Federkräfte auf, und leitet diese überdies ganz in der Nähe der Stellen ein, an denen die Klappe am Fahrzeug angelenkt ist. Das Federglied (60) kann während des Lackierens und Einbrennens aus einem Scharnier (62) ausgehängt werden und ist dann nicht wirksam.

PATENTANWALT RAIBLE
7000 STUTTGART 1
BIRKENWALDSTRASSE 213
(NAHE KUNSTAKADEMIE/KILLESBERG)

TELEFON (07 11) 25 33 22
TELEGRAMME: ABELPAT STUTTGART
POSTSCHECK STUTTGART 744 00-708
LANDESGIROKASSE STUTTGART 2 915 076

PATENTANWALT
DIPL.-ING. HANS RAIBLE

0030531

Ausscheidung aus 79 10 2410.2
BOSSERT KG
7340 Geislingen

STUTTGART, DEN 10.1.1981
ANWALTSAKTE: B61.32EU52A/m

## Klappenvorrichtung für ein Fahrzeug

Die Erfindung betrifft eine Klappenvorrichtung für ein
Fahrzeug, mit einem Scharnier zur drehbaren Anlenkung
der Klappe und mit einem Federglied, welches die Klappe in
ihrer Offen- und in ihrer Schließstellung festhält und welches
an der Klappe angreift.

Bei vielen Fahrzeugen, insbesondere bei Personenkraftwagen, wird der Tankverschluß gewöhnlich von einer Klappe
überdeckt, um ein Verschmutzen des Tankverschlusses
zu vermeiden. Diese Klappe muß in ihrer Schließstellung
und in ihrer Offenstellung stehenbleiben, d.h. sie muß dort
entweder verrasten oder durch Federdruck oder dergleichen
in diesen Stellungen festgehalten werden. Dies zeigt z.B.
die DE - OS 22 42 822. Um zu verhindern, daß der Federdruck
die Klappe verwölbt, was unerwünscht ist, muß dort auf
der Innenseite der Klappe ein besonderes Blechteil vorgesehen
werden, das die Federkräfte großflächig auf die Klappe verteilt. Eine solche Lösung ist aber aus Kostengründen oft
unerwünscht, und sie ist auch ungeeignet , wenn die Klappe
z.B. aus Kunststoff oder als dünnes Druckgußteil ausgebildet
werden soll.

Deshalb ist es eine Aufgabe der Erfindung, die bisherigen
Klappen zu verbessern, und insbesondere, eine Klappe zu
schaffen, welche sich auch bei einem direkten Angriff des
genannten Federglieds wenig verwölbt.

- 2 -

Nach der Erfindung wird die angegebene Aufgabe gelöst durch
die im Anspruch 1 angegebenen Maßnahmen. Eine solche Klappenvorrichtung läßt sich einfach und preiswert herstellen und hat
gute Gebrauchseigenschaften.

Weitere Einzelheiten und vorteilhafte Weiterbildungen der
Erfindung ergeben sich aus den im folgenden beschriebenen
und in der Zeichnung dargestellten, in keiner Weise als
Einschränkung der Erfindung zu verstehenden Ausführungsbeispielen, sowie aus den übrigen Unteransprüchen. Es zeigt:

Fig. 1   eine Draufsicht von außen auf ein erstes Ausführungsbeispiel einer Klappenvorrichtung, die an einem Ende
         teilweise weggeschnitten dargestellt ist,

0030531

Fig. 2A    einen Schnitt, gesehen längs der Linie
           II-II der Figur 1, also bei geschlossener
           Klappe,

Fig. 2B    einen Schnitt analog Fig. 2A, aber bei geöffneter Klappe,

Fig. 3     einen Schnitt, gesehen längs der Linie III-III
           der Fig. 1,

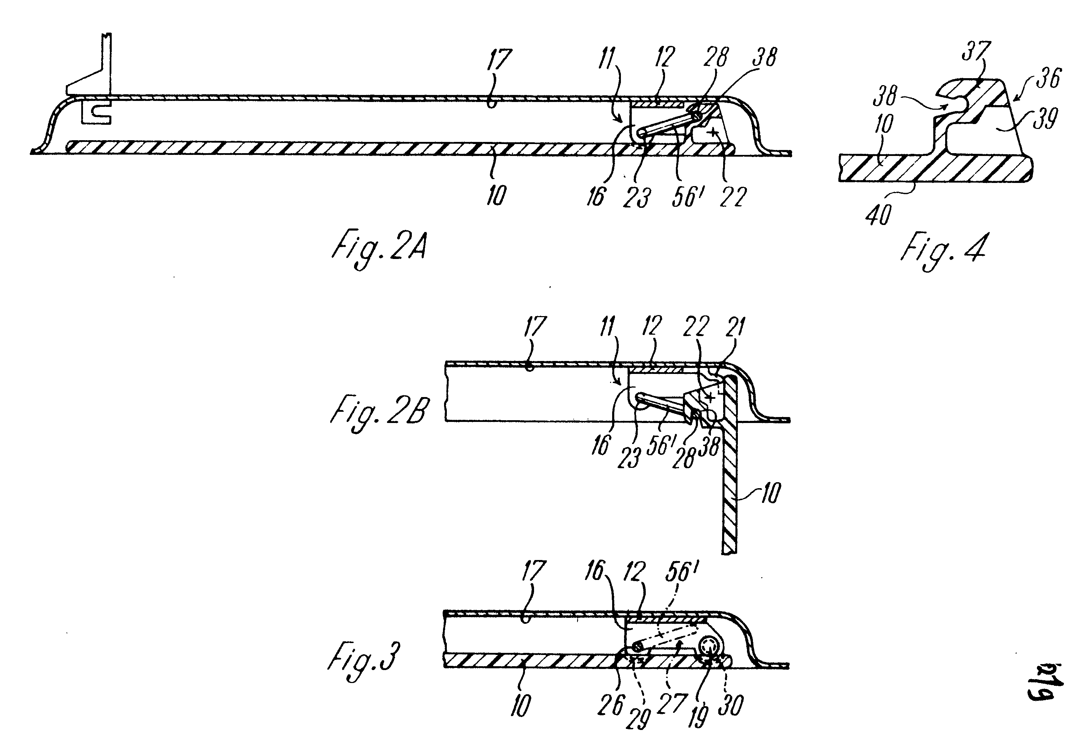

Fig. 4     eine Einzelheit aus Fig. 2A, in vergrößertem
           Maßstab,

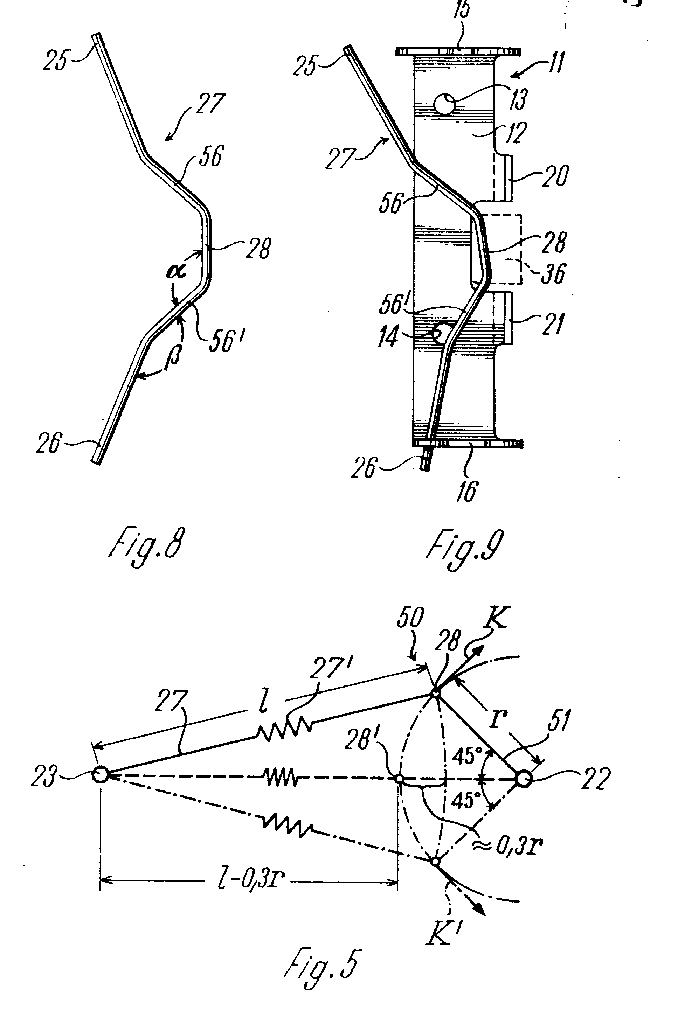

Fig. 5     ein Schaubild zur Erläuterung des Festhaltens
           der Klappe in ihren beiden Endlagen,

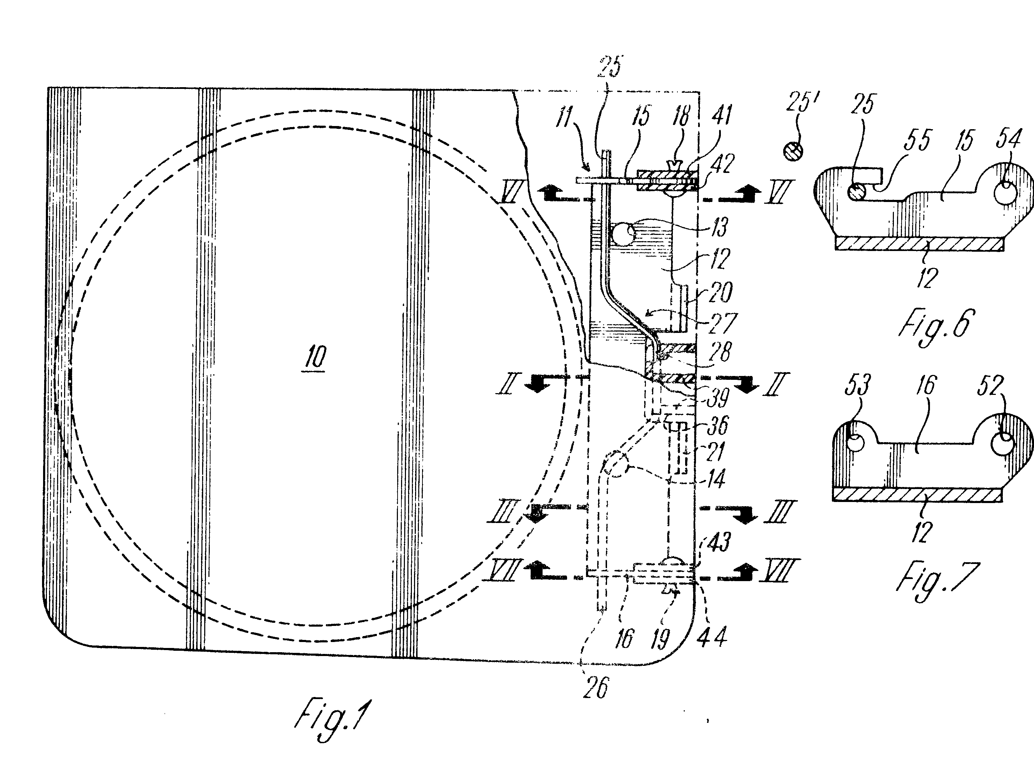

Fig. 6     einen vergrößerten Schnitt, gesehen längs der
           Linie VI-VI der Fig. 1,

Fig. 7     einen vergrößerten Schnitt, gesehen längs der
           Linie VII-VII der Fig. 1,

Fig. 8     das beim ersten Ausführungsbeispiel verwendete
           längliche Federglied, im entspannten Zustand,

Fig. 9     das Federglied nach Fig. 8 vor der endgültigen
           Montage,

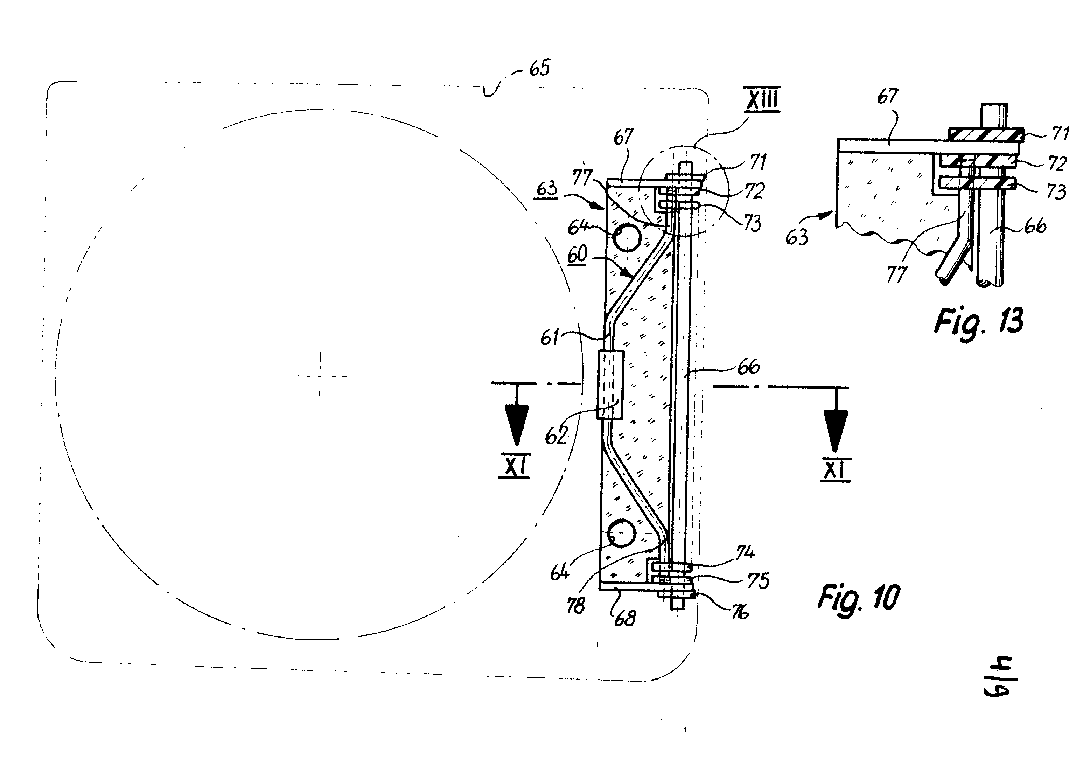

Fig. 10    eine Draufsicht auf ein 2. Ausführungsbeispiel
           einer erfindungsgemässen Klappe und ihrer An-
           lenkung, wobei die Klappe selbst nur mit
           strichpunktierten Linien angedeutet ist,

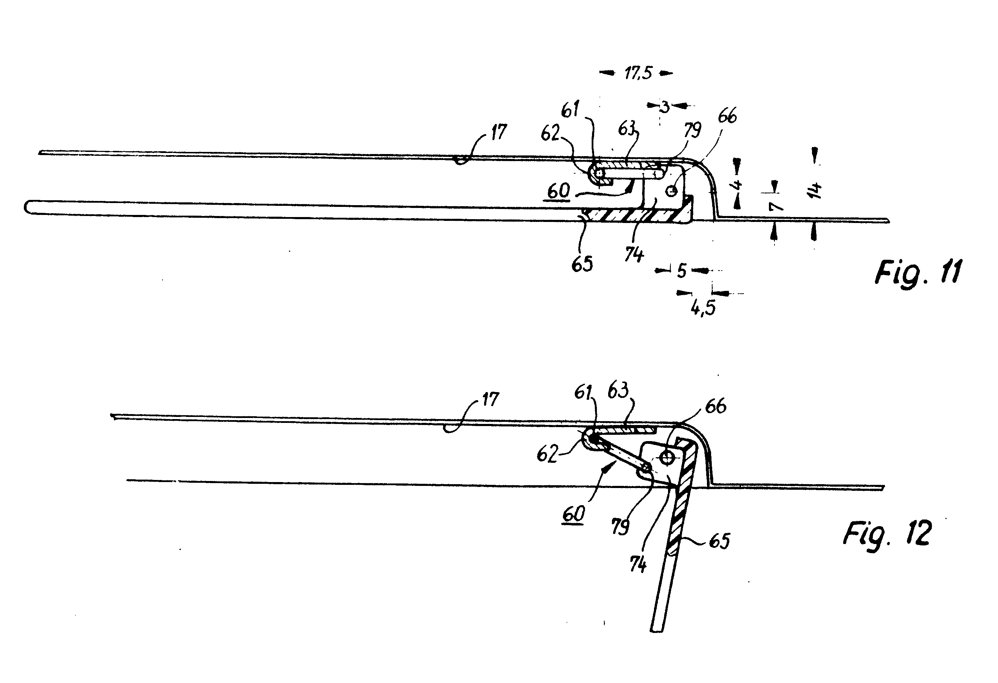

Fig. 11    einen Schnitt, gesehen längs der Linie XI-XI
           der Fig. 10,

Fig. 12    einen Schnitt analog Fig. 11, aber bei geöffneter
           Klappe,

0030531

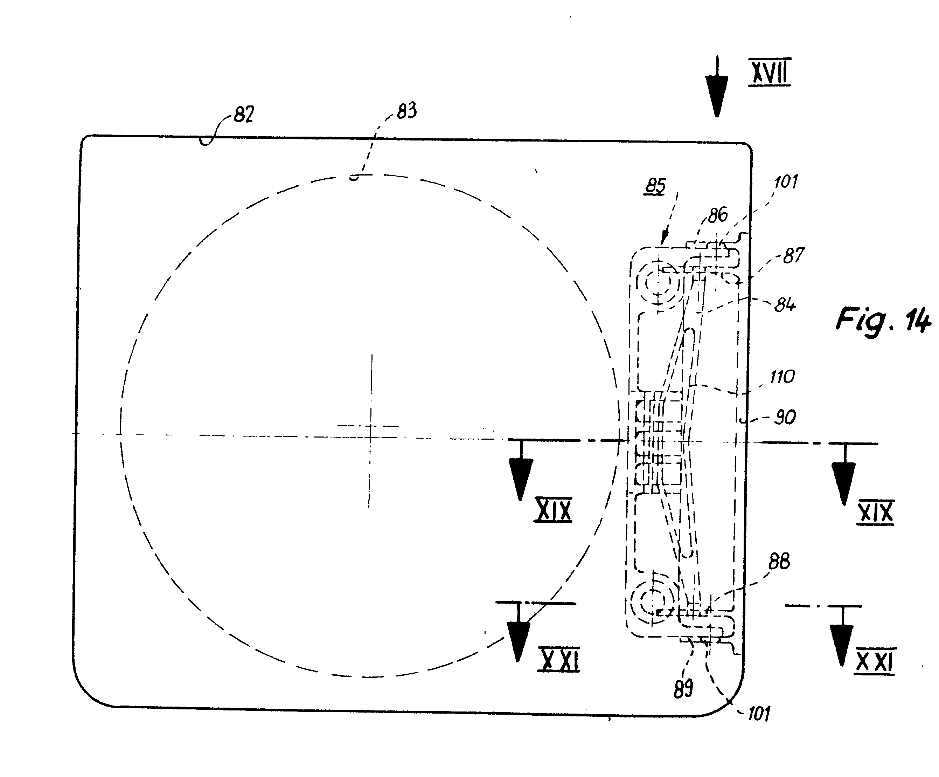

Fig. 13    eine.in Fig. 10 mit XIII bezeichnete Einzelheit, in vergrößertem Maßstab,

Fig. 14    eine Draufsicht auf ein 3. Ausführungsbeispiel
           einer erfindungsgemäßen Klappe,

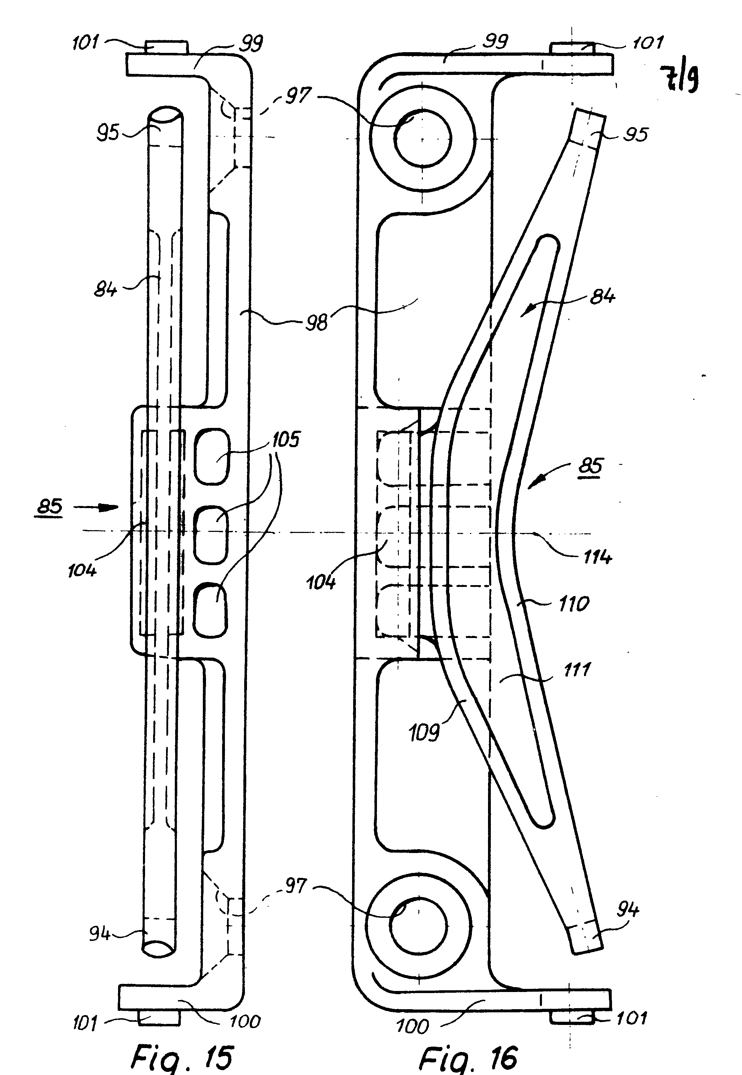

Fig. 15    zwei vergrößerte Darstellungen des bei Fig. 14
u. 16      verwendeten, bevorzugt aus Kunststoff hergestellten Scharniers und der an diesem befestigten Kunststoff-Feder, aus 2 verschiedenen
           Richtungen gesehen,

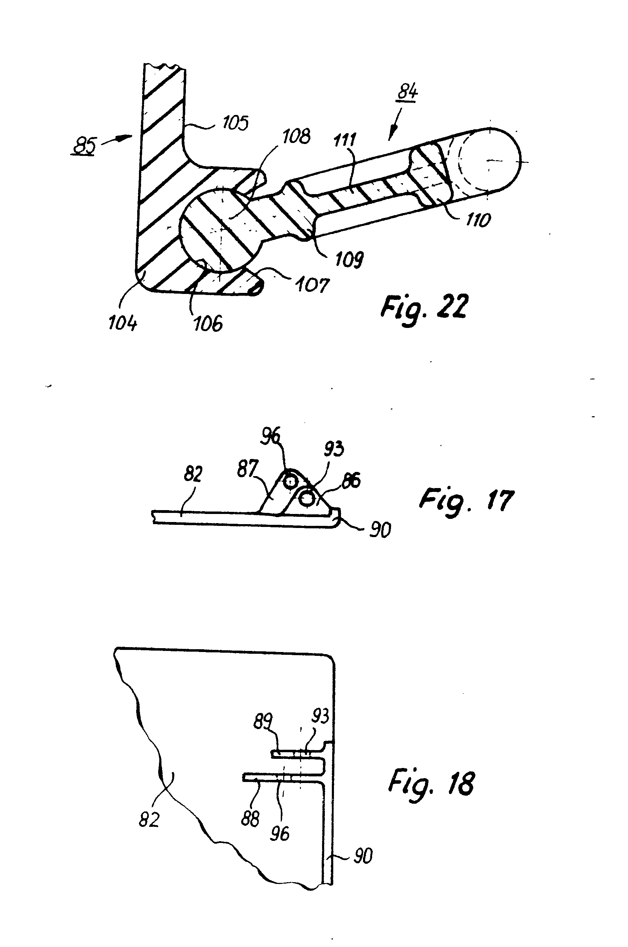

Fig. 17    eine Ansicht, gesehen in Richtung des Pfeiles
           XVII der Fig. 14,

Fig. 18    eine Draufsicht von unten auf den mit den
           Scharniergliedern gemäß Fig. 17 versehenen
           Teil der Klappe,

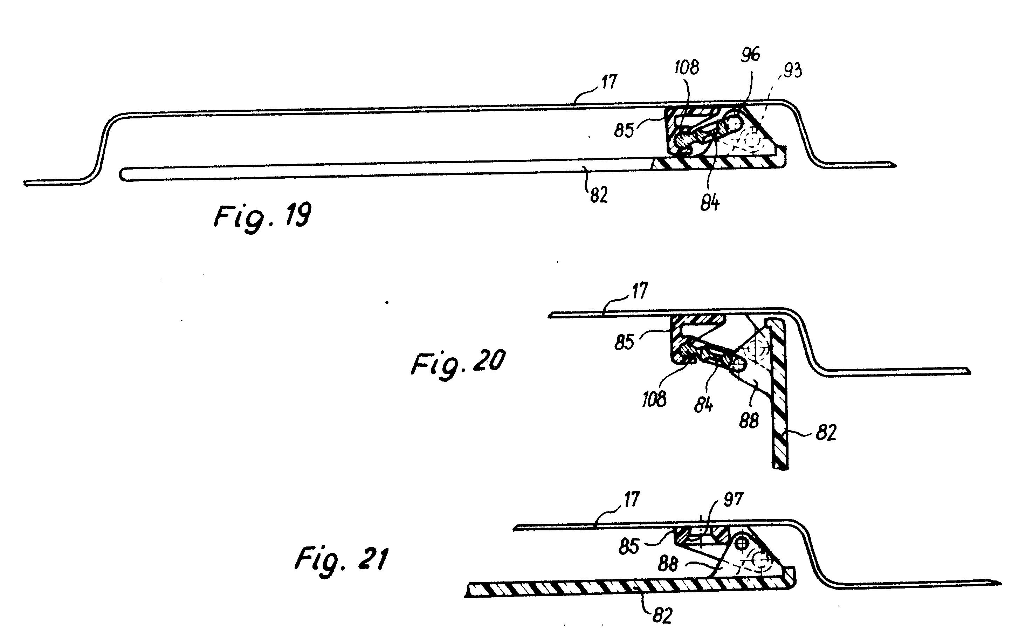

Fig. 19    einen Schnitt, gesehen längs der Linie XIX-XIX
           der Fig. 14, also bei geschlossener Klappe,

Fig. 20    einen Schnitt analog Fig. 19, aber bei geöffneter
           Klappe,

Fig. 21    einen Schnitt, gesehen längs der Linie XXI-XXI
           der Fig. 14, und

Fig. 22    eine stark vergrößerte Schnittdarstellung
           durch das längliche Federglied und seine
           Anlenkung am Scharnier, gesehen längs der
           Linie XIX-XIX der Fig. 14.

- 5 -                                    0030531

Fig. 1 zeigt eine Draufsicht von außen auf eine erfindungsgemäße Klappe 10, die hier als Spritzgußteil
aus einem geeigneten Kunststoff, z.B. einem schlagzähen Polyamid, ausgebildet ist, welcher Kunststoff
zweckmässig mit geeigneten Fasern oder Kugeln
aus Glas oder Graphit verstärkt ist, z.B. mit
hohlen Glaskügelchen. Bevorzugt wird ein Polyamid
mit einem Glasfaseranteil von 30 %, z.B. Durethan.
Das obere rechte Eck der Klappe 10 ist weggeschnitten
dargestellt und durch strichpunktierte Linien angedeutet.

Zum Befestigen der Klappe 10 in einer flachen Karosseriemulde 17 (vergleiche Fig. 2 und 3) eines im übrigen
nicht dargestellten Fahrzeugs dient ein im Querschnitt
etwa U-förmiges Scharnierlager 11, das aus einer Basis
12 mit zwei Befestigungslöchern 13, 14 und zwei seitlich
hochgebogenen Wangen 15, 16 besteht. Das Scharnierlager 11 wird mittels nicht dargestellter Blechschrauben, die die Löcher 13 und 14 durchdringen,
in dieser Mulde 17 befestigt, und an seinen Seitenwangen 15, 16 ist wie dargestellt mittels zweier
Nieten 18, 19 die Klappe 10 drehbar angelenkt. Das
Scharnierblech 11 ist ferner an seiner einen Längsseite zu Anschlägen 20, 21 hochgebogen, welche die
größte Offenstellung der Klappe 10 begrenzen, wie
das Fig. 2B klar zeigt. Die Seitenwangen 15, 16 dienen
auch zur drehbaren Lagerung der beiden Enden 25, 26 eines
länglichen Federglieds 27, das im folgenden auch
    als Federbügel bezeichnet wird und dessen
Mittelabschnitt 28 etwa zylindrisch ausgebil-

det ist und parallel zur Drehachse der Klappe 10 verläuft, welche mit 22 bezeichnet ist. Die beiden Enden
25 und 26 haben im eingebauten Zustand ebenfalls eine gemainsame, zur Drehachse der Klappe 10 parallele Achse 23
( vgl. Fig. 2A und 2B). Die Drehachse 22 verläuft durch
die beiden Nieten 18 und 19. Wie man am besten aus Fig. 3,
6 und 7 erkennt, haben die Seitenwagen 15 und 16 ihre größte
Höhe jeweils an den Stellen, an denen sie mit entsprechenden Ausnehmungen zur Aufnahme der Nieten 18 bzw. 19 und
der Enden 25 bzw. 26 des Federbügels 27 versehen sind, und
damit die Klappe 10 dort nicht an die Seitenwangen 15, 16
anstößt, ist sie mit entsprechenden Ausnehmungen 29, 30
versehen, die in Fig. 3 angedeutet sind. Dies trägt zur
niedrigen Bauhöhe der gesamten Anordnung bei, ohne die
Klappe 10 zu schwächen, da die Ausnehmungen 29, 30 nur ein
sehr kleines Volumen haben.

Wie die Fig. 6 und 7 zeigen, sind die Seitenwangen 15 und 16 unter=
schiedlich ausgebildet. Die in Fig. 1 untere Seitenwange 16 hat auf der
einen Seite ein Loch 52 zur Aufnahme der Niete 19, und auf der anderen
Seite ein Loch 53 zur Aufnahme des Endes 26 des Federbügels 27.

Die in Fig. 1 obere Seitenwange 15 hat ebenfalls ein Loch 54 zur
Aufnahme der Niete 18, und sie hat ferner einen etwa parallel zur
Basis 12 verlaufenden Schlitz 55, in den wie dargestellt das Federende
25 leicht eingehängt werden kann, z.B. von Hand oder mit einem Werkzeug.

Warum dieser Schlitz 55 ? Wie bereits beschrieben, besteht die Klappe 10
aus Kunststoff und wird bei der Herstellung des Fahrzeugs mit dessen
Farbe lackiert und anschließend durch Einbrennen getrocknet. Da beim
Einbrennen die Festigkeit des Kunststoffs vorübergehend absinkt,
sollen hierbei keine mechanischen Kräfte auf ihn wirken. Deshalb
wird bei der Anlieferung das Federende 25 ausgehängt, wodurch sich die
Feder 27 entspannt und etwa die in Fig. 9 dargestellte Lage einnimmt,
in der auf die Tankklappe keine Kräfte mehr von der Feder 27 wirken.
In Fig. 6 ist dies durch die Position 25' (entspanntes Federende 25)
angedeutet. Nach dem Lackieren, Einbrennen und Abkühlen wird
das Federende 25 in den Schlitz 55 eingehängt, und die Tankklappe 10
ist dann gebrauchsfertig.

BAD ORIGINAL

Fig. 8 zeigt die Feder 27 in ihrer gestreckten Form, in der sie etwa die Querschnittsform eines tiefen Tellers (mit sehr breitem Rand) oder eines Sonnenhuts mit breiter Krempe hat. Das Mittelteil 28, das eine Länge von ca. 17 mm haben kann, geht unter einem stumpfen Winkel alpha (ca. 130$^o$) beidseits über in einen ebenfalls ca. 17 mm langen geraden Abschnitt 56 bzw. 56', und diese gehen jeweils unter einem stumpfen, fast gestreckten Winkel beta (ca. 160$^o$) über in die geraden Endabschnitte 25 bzw. 26. Wie man ferner aus Fig. 1 erkennt, wird beim Einhängen des Endes 25 der Winkel alpha größer und der Winkel beta kleiner, wodurch die Feder 27 eine entsprechende Vorspannung erhält. Wichtig ist auch, daß die Endabschnitte 25 und 26 dabei jeweils etwa parallel zur Basis 12 verlaufen, um ein Klemmen im Schlitz 55 bzw. im Loch 53 sicher zu vermeiden und dadurch auch nach Jahren eine sichere, quietschfreie Funktion der Klappe zu gewährleisten. Die beschriebene Federform trägt hierzu wesentlich bei.

Wie man aus Fig. 8 ferner entnimmt, schließen die Endabschnitte 25 und 26 bei ungespannter Feder einen Winkel von etwa 120 ..140$^o$, bevorzugt 130$^o$, ein.

Im Rahmen der Erfindung ist naturgemäß bei der Ausbildung der Bügelfeder 27 eine große Gestaltungsfreiheit gegeben, aber die dargestellte Form stellt eine bevorzugte Ausführungsform dar, die sich im praktischen Versuch außerordentlich bewährt hat.

Im Bereich ihrer Drehachse 22 ist die Klappe 10 auf ihrer Innenseite und etwa in der Mitte zwischen den beiden Nieten 18 und 19 mit einem höckerartigen Vorsprung 36 versehen, dessen in Fig. 4 oberer Abschnitt 37 mit einer Ausnehmung 38 zum Einclipsen des Mittelteils 28 der Bügelfeder 27 versehen ist. Der obere Abschnitt 37 ist nur durch einige schmale und dünne Stege 39 mit der eigentlichen Klappe 10 verbunden. Hierdurch wird in sehr geschickter Weise erreicht, daß die in Fig. 4 mit 40 bezeichnete Außenseite der Klappe 10 auch dann eine glatte Oberfläche behält, wenn der Kunststoff nach dem Ausformen im Bereich des höckerartigen Vorsprungs 36 etwas schrumpft.

0030531

Zum Anlenken an den Seitenwangen 15, 16 des Scharnierlagers 11
ist die Klappe 10 ferner mit schmalen, stegartigen Scharniergliedern 41, 42, 43 und 44 versehen, welche mit entsprechenden Ausnehmungen für die Nieten 18, 19 versehen sind und gegen die Seitenwangen 15 bzw. 16 anliegen und somit die Klappe in Höhenrichtung
führen. Die Scharnierglieder 41 - 44 sind ebenfalls deshalb so
schmal ausgebildet, damit sich auf der Außenseite 40 beim Schrumpfen des Kunststoffs nach dem Entformen keine unschönen Vertiefungen
bilden.

Wie die Fig. 2A und 2B zeigen, ist das Mittelteil 28 in die Ausnehmung 38 eingeclipst und kann sich in dieser drehen. Man erhält
so eine Kniehebelanordnung, wie sie in Fig. 5 im Prinzip und in
3 verschiedenen Stellungen dargestellt ist, und zwar wird der.
eine Hebel, der in Fig. 5 mit 51 bezeichnet ist, die Länge r hat
und zwischen der Drehachse 22 und dem Mittelteil 28 verläuft, von
dem höckerartigen Vorsprung 36 gebildet, während der andere Hebel
von der Bügelfeder 27 gebildet ist und deshalb in Fig. 5 ebenfalls
mit 27 bezeichnet wird. Diese Feder 27 erstreckt sich von der
Drehachse 23 zum Mittelteil 28; ihre Federeigenschaft ist in
Fig. 5 durch eine FEder 27' symbolisch dargestellt.

Schon in der Schließstellung der Klappe 10, die in Fig. 5 mit durchgehenden Linien dargestellt ist, hat die Bügelfeder 27 eine Vorspannung, die ausreicht, um die Klappe 10 bei allen Fahrtbedingungen
sicher geschlossen zu halten. Da die beiden Drehachsen 22 und 23,
welche beide in den Seitenwangen 15 bzw. 16 ausgebildet sind,
einen unveränderlichen, festen Abstand voneinander haben, bewirkt
diese Vorspannung eine Kraft K auf das Mittelteil 28 und damit
ein Drehmoment auf die Klappe 10, welches bestrebt ist, diese
Klappe geschlossen zu halten.

Wird die Klappe 10 geöffnet, so muß vom Benutzer ein entsprechendes
Gegenmoment aufgebracht werden, wodurch in der gestreckten Stellung,
die in Fig. 5 mit gestrichelten Linien angedeutet ist, die Bügelfeder 27 um etwa den Betrag 0,3 . r verkürzt und ihre Spannung
entsprechend erhöht wird. Die Lage des Mittelteils 28 in der
gestrichelten Stellung ist in Fig. 5 mit 28' bezeichnet.

BAD ORIGINAL

Nach dem Überschreiten der gestreckten Stellung kehrt sich
die Richtung des Drehmoments um (Kraft K' in Fig. 5), und
dieses Drehmoment ist nun bestrebt, die Klappe 10 in ihre
in Fig. 2B dargestellte Offenstellung zu drehen und dort
zu halten. In Fig. 5 ist die Offenstellung mit strichpunktierten Linien dargestellt.

Beim Öffnen dreht sich die Klappe 10 um etwa 90°. In vielen
Fällen ist es zweckmässig, die gestreckte Stellung der
Kniehebelanordnung 50 so zu legen, daß sie etwa nach dem
halben Öffnungsweg der Klappe 10 erreicht wird, so, wie
das Fig. 5 zeigt, doch sind auch andere Winkelverhältnisse
möglich. Die Klappe 10 kann selbstverständlich im geschlossenen Zustand auch verriegelt oder sonstwie gesichert
werden.

Die Klappe nach dem ersten Ausführungsbeispiel paßt wie
dargestellt z.B. in eine muldenförmige Vertiefung 17 von
nur 13 mm Tiefe und hat dabei im Vergleich zu den bekannten
Klappen einen wesentlich einfacheren Aufbau, der zudem
auch äußerst wenig korrosionsanfällig ist. Dadurch, daß der
zweite Arm der Kniehebelanordnung als längliches Federglied nach Art einer Bügelfeder ausgebildet ist, steht
für die Energiespeicherung in dieser Feder ein ausreichend
großes Werkstoffvolumen zur Verfügung, denn diese Feder
erstreckt sich im wesentlichen senkrecht zu der von ihr
zu erzeugenden Federkraft und entspricht daher in optimaler Weise der Forderung nach niedriger Bauhöhe. Die
Klappe 10 läßt sich sehr leicht entformen, weil die Ausnehmungen zwischen den Stegen 39 und zwischen den Scharniergliedern 41 - 44 sich alle nach derselben Seite hin
öffnen und daher für alle ein gemeinsamer Kern verwendet
werden kann, sich also ein einfaches Formwerkzeug ergibt.

Naturgemäß könnte die Klappe 10 hier wie auch bei den
folgenden Ausführungsbeispielen aus einem anderen Werkstoff als dem angegebenen glasfaserverstärkten Kunststoff
ausgebildet werden, z.B. aus Zinkdruckguß, Aluminiumdruckguß, oder als Blechteil.


Das zweite Ausführungsbeispiel nach den Fig. 10 - 13
zeigt eine Variante der Anordnung des länglichen Federglieds, das hier mit 60 bezeichnet ist. Dieses hat weitgehend dieselbe Form wie das Federglied 27, also ebenfalls
etwa die Querschnittsform eines Suppentellers, ist aber
hier mit seinem Mittelabschnitt 61 in einem im Querschnitt etwa U-förmigen Lagerteil 62 am Scharnierlager 63
eingehängt, welch letzteres ebenfalls 2 Befestigungslöcher 64 zur Befestigung in der Karosseriemulde 17 aufweist, deren Tiefe hier z.B. 14 mm betragen kann. Die
Form des Lagerteils 62 geht besonders deutlich aus den
Fig. 11 und 12 hervor und ermöglicht es, das Federglied
60 erst nach dem Lackieren und Einbrennen einzuhängen
und dadurch die Klappe 65, deren Form und Werkstoff
denjenigen der Klappe 10 weitgehend entsprechen, beim
Einbrennvorgang von äußeren Kräften freizuhalten.

Die Klappe 65 ist mittels einer Welle 66 in den beiden
Seitenwangen 67, 68 des Scharnierlagers 11 gelagert
und hat hierzu insgesamt 6 schmale Scharnierglieder 71 - 76,
die jeweils durch Abstände voneinander getrennt sind,
um beim Erstarren des Kunststoffs Vertiefungen der
Oberfläche auf der Außenseite der Klappe 65 zu vermeiden.
Die Scharnierglieder 71 und 72 nehmen zwischen sich die
Seitenwange 67 auf, während die Scharnierglieder 75 und
76 zwischen sich die Seitenwange 68 aufnehmen und dadurch
die Klappe 65 in Höhenrichtung führen.

Die Scharnierglieder 72 - 75 dienen ferner zur Aufnahme
und Anlenkung der Enden des Federglieds 60, welche mit 77 (oberes Ende) und 78 (unteres Ende) bezeichnet
sind. Hierzu befinden sich dort Löcher 79, von denen
eines in den Fig. 11 und 12 dargestellt ist und in die
diese Federenden gesteckt sind.

Die Federenden 77 und 78 erstrecken sich hier bis ziemlich
nahe an die Seitenwangen 67 bzw. 69 heran, wie das
Fig. 13 besonders deutlich zeigt. Dies ergibt eine gute
Führung für diese Enden, die sich bei einer Betätigung
der Klappe jeweils etwas in Längsrichtung verschieben.
Außerdem liegen hier in sehr vorteilhafter Weise die
Angriffspunkte der Federkraft direkt neben den Lagerstellen, so daß diese Federkraft die Klappe 65 praktisch
nicht verformen kann, zumal an jeder Angriffsstelle nur
die halbe Federkraft wirksam ist. Beim ersten Ausführungsbeispiel dagegen wird die gesamte Kraft der Feder 27
an einer einzigen Stelle in die Klappe 10 eingeleitet, und
diese Stelle ist dazuhin noch weit von der Lagerstelle
entfernt, so daß dort die Klappe 10 wesentlich steifer
ausgebildet sein muß, um ein unerwünschtes Auswölben
durch die Kraft der Feder 27 zu vermeiden. Bei Klappen
aus Kunststoff ist die Einleitung der Federkraft an
mehreren Stellen günstiger, und die Erfindung sieht deshalb
die Einleitung der Federkraft in die Klappe bevorzugt
an mehreren Stellen vor, welche bevorzugt dicht bei den
Lagerstellen liegen und deren Zahl auch größer als 2
sein kann, wobei man dann eine entsprechend gewellte
Feder oder auch mehrere Einzelfedern verwenden kann.

Die Wirkungsweise beruht wiederum auf dem Kniehebelprinzip und entspricht völlig der zu Fig. 5 gegebenen
Beschreibung. Fig. 11 gibt - für die Erläuterung der
Kniehebelwirkung - einige Maße an. Danach beträgt die
Länge der - auch im Ruhezustand bereits vorgespannten - Feder 60 hier 14, 5mm, der Mittenabstand der Welle 66
und des Lochs 79, also die Größe r in Fig. 5, beträgt
5 mm, und der - unveränderliche - Abstand zwischen
Welle 66 und Mittelabschnitt 61 beträgt etwa 18 mm.

Wird die Klappe 65 aus der Stellung gem. Fig. 11
um 40° geöffnet, so liegen die Punkte 62, 79 und 66
auf einer Linie, und die Feder 60 wird auf 12,9 mm
verkürzt, also um etwa 11 %, und wird dadurch entsprechend
stärker gespannt. Bei Überschreiten dieser Totpunktlage federt die Klappe 65 dann weiter bis zu der in Fig. 12
dargestellten Offenstellung, bei der sie etwa 80°
geöffnet ist und bei der die Feder 60 wieder wie in der
Ausgangslage (Fig. 11) eine Länge von 14, 5 mm hat.

Naturgemäß dienen die angegebenen Maße nur zur Erläuterung und zum besseren Verständnis der Erfindung,
sind also Ausführungsbeispiel. Man kann sie ohne weiteres
variieren, z.B. um eine andere Totpunktlage zu erhalten, oder um bei einer tieferen Mulde 17 sich einer
anderen Geometrie anzupassen.

Beim 1. und 2. Ausführungsbeispiel wurde jeweils ein
längliches Federglied aus Federstahl verwendet.
Bei Anordnungen mit Kunststoffteilen ist aber generell
anzustreben, alle Teile aus Kunststoff zu machen, um
die vollen Vorteile des Kunststoffs zur Geltung zu
bringen, insbesondere seine Korrosionsfreiheit. Denn
die Stahlfedern 27 oder 60 können natürlich im Laufe
der Zeit rosten und müssen deshalb gegen Rost geschützt
werden. Dasselbe gilt für das Scharnierlager.

Das dritte Ausführungsbeispiel nach den Fig. 14 bis 22
zeigt deshalb eine Anordnung, welche einschließlich
des Scharnierlagers und des Federglieds vollständig aus Kunststoff aufgebaut ist und den Vorteil der
Korrosionsfreiheit hat. Außerdem ist diese Anordnung
auch sehr leicht zu montieren und preiswerter in der
Herstellung als die vorhergehenden Ausführungsbeispiele.
Auch beim dritten Ausführungsbeispiel werden für gleiche
oder gleichwirkende Teile wie in den vorhergehenden
Figuren jeweils dieselben Bezugszeichen verwendet.

Fig. 14 zeigt in Draufsicht eine Tankklappe 82; mit 83
ist die Einfüllöffnung des Tanks angedeutet, die von
der geschlossenen Klappe 82 abgedeckt wird. Die Klappe 82
besteht auch hier vorzugsweise aus einem glasfaserverstärktem Kunststoff (GFK), zweckmässig einem Polyamid,
z.B. DURETHAN. Auch das längliche Federglied, das hier
mit 84 bezeichnet ist, sowie das Scharnierlager 85, sind
aus demselben GFK hergestellt. Die Klappe 82 hat an ihrer
Unterseite lediglich vier Scharnierglieder 86 - 89,
welche senkrecht von der Klappe abstehen und an der linken
Außenseite der Klappe (bezogen auf Fig. 14) durch einen
Steg 90 verbunden sind. Alle Scharnierglieder sind flächig
und verlaufen parallel zueinander. Die äußeren Scharnierglieder 86 und 89 dienen zur Anlenkung am Scharnierlager
85 und haben dazu Ausnehmungen 93, vgl. die Fig. 17 und
18. Die inneren Scharnierglieder 87 und 88 dienen zum
Angriff der beiden äußeren Enden 94 und 95 des Federglieds 84 und sind hierzu jeweils mit einer Ausnehmung 96
versehen, vgl. die Fig. 17 und 18. Der in die Zeichenebene projizierte Mittelabstand der Ausnehmungen 93
und 96 entspricht dem Maß r in Fig. 5. Naturgemäß könnte
man die Scharnierglieder 87 und 88 auch einsparen und
dafür die Ausnehmungen 96 an den Scharniergliedern 86 und
89 vorsehen, müßte letztere dafür aber stärker ausbilden,
was aus den bereits erläuterten Gründen bei einer Klappe
aus Kunststoff meist unerwünscht ist, weil sich dann an
diesen Stellen an der Oberfläche der Klappe Vertiefungen
ausbilden könnten. Die dargestellte Ausführungsform
wird deshalb bevorzugt, wobei auch hier anzustreben ist,

die beiden Scharnierglieder 86 und 87 dicht beieinander anzuordnen, ebenso die beiden Scharnierglieder 88 und 89, um Verformungen der Klappe zu vermeiden, xxxx xxx xxx xxx xxx wie das bereits beim zweiten Ausführungsbeispiel ausführlich beschrieben wurde.

Das Scharnierlager 85 sowie das an ihm eingerastete längliche Federglied 84 aus Kunststoff sind in den Fig. 15 und 16 nochmals dargestellt. Das Scharnierlager 85 hat eine mit 2 Befestigungslöchern 97 versehene Basis 98, an deren beiden Längsenden je eine Seitenwange 99 bzw. 100 vorgesehen ist. Die Seitenwangen 99 und 100 sind an ihrer Außenseite jeweils mit einem Zapfen 101 versehen, der jeweils zum federnden Einrasten in die zugeordnete Ausnehmung 93 an der Klappe 82 ausgebildet ist. Zum Einrasten werden die Seitenwangen 99, 100 etwas zusammengepreßt, und die Zapfen 101 können dann direkt einrasten und lagern die Klappe 82 am Scharnierlager 85. Diesen eingerasteten Zustand zeigt Fig. 14. Hierbei bewirken die Seitenwangen 99 und 100 gleichzeitig auch eine Führung der Klappe 82 in Höhenrichtung. Ersichtlich ist diese Anordnung auch dann sehr vorteilhaft, wenn z.B. nach einem Unfall eine neue Klappe eingebaut werden muß, da der Austausch sehr rasch vor sich geht.

In seiner Mitte hat das Scharnierlager 85 ein Widerlager 104 für das Federglied 84. Dieses Widerlager 104 ist an seiner unteren Seite mit 3 Ausnehmungen 105 versehen und hat an seiner Oberseite eine zylindrische Ausnehmung 106, die seitlich mit einer Einführöffnung 107 versehen ist, um das Einclipsen bzw. Einrasten eines zylindrischen Vorsprungs 108 am Mittelabschnitt des Federglieds 84 zu ermöglichen, wie das die Darstellung nach Fig. 22 sehr deutlich und präzise zeigt. Die Einführöffnung 107 ermöglicht auch die erforderliche Schwenkbewegung des Federglieds 84 in der Ausnehmung 106. Bein dritten
Ausführungsbeispiel beträgt der maximale Schwenkwinkel
an dieser Stelle weniger als 40 $^\circ$, ist also nicht sehr
groß. Ein solcher Winkel läßt sich durch geeignete
Wahl der Geometrie der Kniehebelanordnung erreichen,
und das dritte Ausführungsbeispiel zeigt eine entsprechende, bevorzugte Lösung.

Das Federglied 84 ist nach dem Prinzip des Doppel-T-
Trägers aufgebaut, wie das Fig. 22 klar zeigt, d.h. zwischen
zwei Flanschen 109, 110 erstreckt sich als Verbindungssteg eine relativ dünne Verbindungswand 111. Der Flansch
109 weist einen zum zylindrischen Abschnitt 108 parallelen
Abschnitt auf, der z.B. 2 cm lang sein kann und an seinen
Enden jeweils unter einem Winkel von etwa 155$^\circ$ abbiegt.
Der Flansch 110, welcher im Betrieb auf Zug beansprucht
wird, hat im Mittelabschnitt einen Abstand von etwa 6 mm
vom Flansch 109 und bildet dort eine Art Spitze, weil
dort seine beiden Hälften unter einem Winkel von ebenfalls
etwa 155$^\circ$ zusammenlaufen. An den beiden Enden 94 und 95
vereinigen sich wie dargestellt die Flansche 109 und 110
und gehen in zylindrische Abschnitte über, die zum Einrasten in die Ausnehmungen 96 ausgebildet sind und etwa
deren Durchmesser haben. Wie die Zeichnungen zeigen,
ist auch dieses Federglied symmetrisch zu einer Mittelachse 114 aufgebaut, und es hat etwa die Form eines
weit aufgebogenen C bzw. die Querschnittsform einer
flachen Schale mit sehr dickem Boden.

Zur Montage werden die 3 Teile der Klappenanordnung,
also das Scharnierlager 85, das Federglied 84 und die
Klappe 82 durch Einrasten bzw. Einclipsen gelenkig miteinander verbunden, wobei das Federglied eine Vorspannung
erfährt, in dem der erwähnte Winkel von 155$^\circ$ zwischen
oberem und unterem Abschnitt des Flansches 110 wie in

0030531

Fig. 14 dargestellt auf etwa 170° vergrößert wird,
wobei der Flansch 110 gedehnt und der Flansch 109
zusammengedrückt wird. Hierdurch entsteht eine Vorspannung im Federglied 84, welche in der Ruhestellung
(Fig. 19) und der Offenstellung (Fig. 20) wirksam
ist, um die Klappe 82 in diesen beiden Stellungen
sicher festzuhalten, aber ein ungehindertes Öffnen
bzw. Schließen durch den Benutzer zu ermöglichen.

Wie man aus einem Vergleich der Fig. 19 und 20 ohne
weiteres entnimmt, befindet sich die Kniehebelanordnung
bei einem Öffnungswinkel der Klappe 82 von ca. 45°
in ihrer Totpunktstellung, dh. dann liegt das Federglied 84 direkt in der - zum Boden der Mulde 17
parallelen - Verbindungslinie zwischen den Mittelpunkten des zylindrischen Vorsprungs 108 und der
Ausnehmung 93 (vgl. Fig. 19) und ist gegenüber seiner
Länge nach Fig. 19 oder 20 um etwa 18 % in der Länge
reduziert, so daß es nach Überschreiten dieser Totpunktlage in der einen oder anderen Richtung sich entspannt und dabei die Klappe 82 entweder voll öffnet
oder voll schließt. Für die bevorzugten Maßverhältnisse
bei Fig. 19 kann man noch folgende Angaben machen:

Mittelpunktabstand zw.zylindr. Vorsprung 108 u. Ausnehmung 93 : 100 %
     "        "    "         "    108 "       "   96 :  80 %
     "        "   Ausnehmung 93       "       "   96 :  34 %.

Dasselbe gilt für Fig. 20, d.h. die von den drei angegebenen Größen aufgespannten Dreiecke in diesen beiden
Figuren haben dieselbe Form, sind aber zueinander
spiegelsymmetrisch.

Es ist noch darauf hinzuweisen, daß auch hier das Federglied 84 zweckmässig erst nach dem Lackieren und Einbrennen eingehängt wird, d.h. man wird die Enden 94 und 95
erst dann in die Öffnungen 96 einhängen. Auch hier ist.

der große Vorteil gegeben, daß die Kraft des Federglieds
84 an 2 räumlich voneinander getrennten Stellen und gleichmässig verteilt in die Klappe 82 eingeleitet wird. Wie man
Fig. 15 entnimmt, ist das Federglied 84 flach ausgebildet, um Verwindungen bei Belastung zu vermeiden, d.h. die
Flansche 109 und 110 liegen alle in derselben Ebene,
ebenso die Zapfen 94 und 95 an ihren Enden und der zylindrische Vorsprung 108.

Die Erfindung ist also optimal an die beengten Raumverhältnisse
angepaßt, wie sie für Tankklappenmulden an Kraftfahrzeugen
typisch sind und bringt eine sehr elegante Lösung für
die Kinematik, die vom Markt gefordert wird, um die Klappe
sicher in der Offenstellung und der Schließstellung zu
halten.

PATENTANWALT RAIBLE
7000 STUTTGART 1
BIRKENWALDSTRASSE 213
.NAHE KUNSTAKADEMIE. KILLESBERG)

TELEFON (0711) 253322
TELEGRAMME: ABELPAT STUTTGART
POSTSCHECK STUTTGART 74400-708
LANDESGIROKASSE STUTTGART 2915076

PATENTANWALT
DIPL.-ING. HANS RAIBLE

BOSSERT KG

7340 Geislingen

STUTTGART, DEN 10.1.1981
ANWALTSAKTE: B61.12EU52A/m

## Patentansprüche

1. Klappenvorrichtung für ein Fahrzeug, mit einem Scharnier zur drehbaren Anlenkung der Klappe und mit einem Federglied, welches die Klappe in ihrer Offen- und in ihrer Schließstellung festhält und welches an der Klappe angreift,
dadurch gekennzeichnet, daß die mindestens eine Anlenkstelle (79; 96) des Federglieds (60; 84) an der Klappe in der Nähe einer Anlenkstelle (71, 72, 75, 76; 86, 89) der Klappe am Fahrzeug bzw. dem an diesem vorgesehenen Scharnier (63; 85) und vorzugsweise dicht bei den zweitgenannten Anlenkstellen liegt, um eine Wölbung der Klappe durch die vom Federglied ausgehenden Kräfte zu reduzieren oder zu vermeiden.

2. Vorrichtung nach Anspruch 1, dadurch gekennzeichnet, daß das Federglied als längliches Federglied (60; 84) ausgebildet ist, das sich etwa parallel zur Drehachse der Klappe erstreckt, und daß für die Anlenkung der beiden Enden (77, 78; 94, 95) dieses länglichen Federglieds (60; 84) gesonderte Aufnahmeteile (73, 74; 87, 88) an der Klappe vorgesehen sind, welche dicht bei den Teilen liegen, die dafür vorgesehen sind, die Klappe am Fahrzeug anzulenken.

3. Vorrichtung nach Anspruch 2, dadurch gekennzeichnet, daß das längliche Federglied (60; 84) in seinem Mittelbereich (61; 108) mit einem fahrzeugfesten Teil (63; 85) gelenkig
verbunden ist.

4. Vorrichtung nach einem der Ansprüche 1 bis 3, dadurch
gekennzeichnet, daß die Klappe (65; 82) als Kunststoffteil
ausgebildet ist und mit ihr einstückige Teile (71 bis 76;
86 bis 89) zur Anlenkung an in Richtung weg vom Fahrzeug
ausgebildeten Vorsprüngen eines Scharnierteils (63; 85)
und zur gelenkigen Verbindung mit dem Federglied (60; 84)
aufweist.

5. Vorrichtung nach den Ansprüchen 2 und 4, dadurch gekennzeichnet, daß sich die Enden (77, 78; 94, 95) des
Federglieds (60; 84) bis dicht zu den Vorsprüngen des
Scharnierteils (63; 85) erstrecken.

6. Vorrichtung nach Anspruch 4 oder 5, dadurch gekennzeichnet, daß die Klappe (65; 82) aus einem mit einem
Fahrzeuglack lackierbaren Kunststoff besteht.

7. Vorrichtung nach einem der vorhergehenden Ansprüche,
dadurch gekennzeichnet, daß das Federglied (60; 84)
aushängbar ausgebildet ist, um bei bestimmten Verarbeitungsschritten, z.B. dem Einbrennen einer Farbschicht
auf der Klappe (65;82), diese von Kräften vom Federglied
(60; 84) entlasten zu können.

8. Vorrichtung nach einem der vorhergehenden Ansprüche,
dadurch gekennzeichnet, daß das Federglied (60; 84)
als Teil einer Kniehebelanordnung (z.B. 50) ausgebildet
ist, deren beide Enden (61, 66; 93, 108) fahrzeugfest
angelenkt sind, deren einer Hebel (z.B. 51) mit der
Klappe (65; 82) fest verbunden ist und deren zweiter
Hebel vom Federglied (60; 84) gebildet ist, wobei die
gestreckte Stellung der Kniehebelanordnung einer Klappenstellung zwischen geöffnet und geschlossen entspricht.

9. Vorrichtung nach Anspruch 8, dadurch gekennzeichnet, daß in der Schließstellung (Fig. 11; Fig. 19), gemessen in einer zur Drehachse (z.B. 22) der Klappe senkrechten Ebene, der erste Hebel (z.B. 51) kürzer ist als der zweite Hebel (z.B. 60).

10. Vorrichtung nach Anspruch 8 oder 9, dadurch gekennzeichnet, daß das Federglied (60; 84) in der Schließ- und/oder der Offenstellung der Klappe (65; 82) eine elastische Vorspannung aufweist, um die Klappe in der betreffenden Lage zu halten.

Fig.6

Fig.7

Fig.1

Fig.2A

Fig. 4

Fig.2B

Fig.3

Fig.8

Fig.9

Fig.5

Fig. 13

Fig. 10

0030531

← 17,5 →

← 3 →

61

17        62        63        79        66

60        ↓4        ↓7        ↓14

65        74

← 5 →

4,5

*Fig. 11*

17        61  63        66

62

60        79

74        65

*Fig. 12*

0030531

5/9

$\overline{XVII}$

82  83

85  101

86

87

84

Fig. 14

110

90

$\overline{XIX}$  $\overline{XIX}$

88

$\overline{XXI}$  $\overline{XXI}$

89  101

0030531

6/2

Fig. 15

Fig. 16

85 → 105   108   111   84 ↗

110

109

107

104   106

**Fig. 22**

96   93

82   87   86

90

**Fig. 17**

89   93

88   96

82   90

**Fig. 18**

919

Fig. 19

Fig. 20

Fig. 21